# EUROPÄISCHE PATENTSCHRIFT

(11) **EP 3 770 563 B1**
(45) Veröffentlichungstag und Bekanntmachung des Hinweises auf die Patenterteilung: **07.06.2023**
(21) Anmeldenummer: 20166123.8
(22) Anmeldetag: 27.03.2020
(51) Int. Cl.: G01G 13/18

(54) **ANLAGE UND VERFAHREN ZUM WIEGEN UND MISCHEN VON INHALTSSTOFFEN FÜR DIE ASPHALTHERSTELLUNG**
SYSTEM AND METHOD FOR WEIGHING AND MIXING INGREDIENTS FOR ASPHALT PRODUCTION
INSTALLATION ET PROCÉDÉ DE PESÉE ET DE MÉLANGE DES INGRÉDIENTS POUR LA FABRICATION D'ASPHALTE

(30) Priorität: 24.07.2019 DE 102019210957
(43) Veröffentlichungstag der Anmeldung: 27.01.2021
(73) Patentinhaber: Benninghoven Zweigniederlassung der Wirtgen Mineral Technologies GmbH, 54516 Wittlich (DE)
(72) Erfinder: Wagner, Frank, 54492 Zeltingen-Rachtig (DE)
(74) Vertreter: Rau, Schneck & Hübner Patentanwälte Rechtsanwälte PartGmbB

(56) Entgegenhaltungen:
- GB-A- 529 641
- GB-A- 784 895
- US-A- 2 287 829

## Beschreibung

Die Erfindung betrifft eine Anlage und ein Verfahren zum Wiegen und Mischen von Inhaltsstoffen für die Asphaltherstellung.

Bei der Asphaltherstellung werden einer Rezeptur entsprechend verschiedene Inhaltsstoffe verwogen und einem Mischer beigegeben, um eine homogene Asphaltmasse herzustellen. Eine exakte Verwiegung der Inhaltsstoffe ist für die Einhaltung der Rezeptur und damit für eine möglichst hohe und reproduzierbare Qualität des Asphalts essentiell. Druckschwankungen in dem Mischer können das Ergebnis der Verwiegung negativ beeinträchtigen und beispielsweise zu einer Fehlverwiegung von mehreren Kilogramm führen.

GB 784 895 A und DD 97 299 A1 offenbaren Anlagen zur Asphaltherstellung.

US 2,287,829 offenbart eine Flüssigkeitsmessvorrichtung.

Der Erfindung liegt die Aufgabe zugrunde, eine qualitativ hochwertige und reproduzierbare Asphaltherstellung zu ermöglichen und insbesondere das Risiko von Fehlverwiegungen zu reduzieren, insbesondere zu vermeiden. Die Aufgabe ist erfindungsgemäß gelöst durch eine Anlage gemäß den Merkmalen des Anspruchs 1 und durch ein Verfahren gemäß den Merkmalen des Anspruchs 6. Der Kern der Erfindung besteht darin, dass eine Verbindungsleitung, die eine Wiegevorrichtung mit einem Mischer verbindet, ein Absperrelement und ein Be-/Entlüftungsventil aufweist. Dadurch ist es möglich, Druckschwankungen im Mischer auszugleichen und/oder von der Wiegevorrichtung zu entkoppeln. In der Wiegevorrichtung, die insbesondere als Bitumenwaage ausgeführt ist, können die Inhaltsstoffe zuverlässig und exakt verwogen werden. Über die Verbindungsleitung, die an einer schließbaren Abgabeöffnung der Wiegevorrichtung angeschlossen ist, können die Inhaltsstoffe in den Mischer abgegeben werden.

Die Verbindungsleitung ist insbesondere eine Rohrleitung, insbesondere eine zumindest abschnittsweise geneigt angeordnete Rohrleitung. Insbesondere ist die Verbindungsleitung ein Fallrohr, das mit einem Neigungswinkel gegenüber der Vertikalen von höchstens 60°, insbesondere von höchstens 45°, insbesondere von höchstens 30°, insbesondere von höchstens 15°, insbesondere von höchstens 10°, insbesondere von höchstens 5° und insbesondere von höchstens 3° beträgt. Das Fallrohr kann auch abschnittsweise gekrümmt ausgeführt sein. Vorteilhaft ist es, wenn die innere Oberfläche der Verbindungsleitung entlang der Förderrichtung der Inhaltsstoffe knickfrei ausgeführt ist, um ein Anhaften der Inhaltsstoffe zu vermeiden. Insbesondere ist die Verbindungsleitung als Zylinderrohr ausgeführt.

Das Absperrelement dient zum Absperren der Verbindungsleitung. Das Absperrelement ist insbesondere entlang der Förderrichtung der Inhaltsstoffe beabstandet von der Abgabeöffnung angeordnet. Das Absperrelement dient insbesondere nicht zum Schließen der Abgabeöffnung. Das Absperrelement ist zwischen einer Schließposition, in der die Verbindungsleitung abgesperrt ist, und einer Offenposition, in der die Verbindungsleitung zumindest teilweise freigegeben ist, verlagerbar. In der Schließposition ist die Verbindungsleitung durch das Absperrelement abgedichtet, insbesondere hermetisch abgedichtet. Das Absperrelement kann insbesondere als Klappe oder Schieber ausgeführt sein.

Das Be-/Entlüftungsventil gewährleistet eine Be-/Entlüftung der Verbindungsleitung. Dadurch ist ausgeschlossen, dass beispielsweise Temperaturschwankungen in der Verbindungsleitung zu Druckschwankungen führen, die auf die Wiegevorrichtung wirken könnten. Die Genauigkeit der Verwiegung ist durch das Be-/Entlüftungsventil erhöht. Eine negative Beeinträchtigung der Wiegegenauigkeit durch Druckschwankungen in der Verbindungsleitung ist durch das Be-/Entlüftungsventil ausgeschlossen.

Der Mischer weist insbesondere ein Mischwerk oder Rührwerk auf, um die im Mischer befindlichen Inhaltsstoffe miteinander zu vermischen. Wesentlich ist, dass die Inhaltsstoffe in dem Mischer miteinander vermischt werden. Der Mischer kann auch ohne Rührwerk oder Mischwerk ausgeführt sein. Beispielsweise sind statische Mischer denkbar.

Beim Einfüllen des Inhaltsstoffes in die Wiegevorrichtung ist die Abgabeöffnung geschlossen. Der eingefüllte Inhaltsstoff wird in der Wiegevorrichtung gesammelt. Während des Einfüllens des Inhaltsstoffes sind das Be-/Entlüftungsventil geöffnet und das Absperrelement in einer Schließposition angeordnet. Das bedeutet, dass während des Einfüllens des Inhaltsstoffes die Wiegevorrichtung von dem Mischer abgekoppelt ist. Eine Übertragung von Druckstößen von dem Mischer auf die Wiegevorrichtung ist ausgeschlossen. Zum Abgeben des Inhaltsstoffes aus der Wiegevorrichtung wird die Abgabeöffnung geöffnet und das Absperrelement in eine Offenposition verlagert.

Insbesondere umfasst die Anlage genau eine Wiegevorrichtung.

Die Wiegevorrichtung ermöglicht insbesondere ein selbsttätiges, Schwerkraft-bedingtes Entleeren über die Verbindungsleitung. Die Verbindungsleitung ist insbesondere an einer Unterseite der Wiegevorrichtung, insbesondere an einem Aufnahmebehälter der Wiegevorrichtung, angeschlossen.

Das Be-/Entlüftungsventil und das Absperrelement sind entlang der Verbindungsleitung beabstandet zueinander angeordnet. Insbesondere ist das Be-/Entlüftungsventil entlang der Verbindungsleitung bezüglich einer von der Verbindungsleitung vorgegebenen Förderrichtung stromaufwärts bezüglich des Absperrelements angeordnet. Es ist aber auch denkbar, dass das Absperrelement stromaufwärts bezüglich des Be-/Entlüftungsventils angeordnet ist.

Das Be-/Entlüftungsventil und das Absperrelement sind funktionell voneinander unabhängig. Es ist insbesondere denkbar, nur das Be-/Entlüftungsventil, oder nur das Absperrelement oder das Be-/Entlüftungsventil und das Absperrelement gemeinsam zu betätigen. Insbesondere ist es möglich, die Verbindungsleitung über das Be-/Entlüftungsventil zu be- oder entlüften, auch wenn das Absperrelement die Verbindungsleitung absperrt.

Eine Anlage mit einem an der Abgabeöffnung angeordneten Schließelement ermöglicht ein unabhängiges Öffnen und Schließen der Abgabeöffnung und damit eine Verbindung der Wiegevorrichtung mit der Verbindungsleitung. Ein Schließelement kann insbesondere als Klappe oder Schieber ausgeführt sein. Insbesondere kann das Schließelement automatisiert betätigt werden.

Eine Anlage mit einem Sensor zum Ermitteln eines Ist-Druckes im Mischer ermöglicht die Ermittlung eines Ist-Druckes im Mischer. Dadurch kann vermieden werden, dass die Wiegevorrichtung in die Verbindungsleitung öffnet, wenn in dem Mischer Überdruck herrscht. Der Sensor ist insbesondere ein Druck-Sensor.

Eine Anlage mit einer Steuerungseinheit, die mit dem Sensor, dem Schließelement, dem Absperrelement, dem Be-/Entlüftungsventil und der Wiegevorrichtung in Signalverbindung steht, ermöglicht eine erhöhte Zuverlässigkeit bei der Durchführung des Verfahrens. Insbesondere kann die Betätigung von Absperrelement und Be-/Entlüftungsventil von einem Ist-Druck im Mischer abhängig gemacht werden.

Ein Verfahren, bei dem der Ist-Druck im Mischer mittels des Sensors erfasst und das Be-/Entlüftungsventil geschlossen wird, wenn die erforderliche Masse des Inhaltsstoffes in der Wiegevorrichtung vorliegt und wenn der Ist-Druck im Mischer einen veränderlich vorgebbaren Soll-Druck nicht übersteigt, ermöglicht das Verbinden der Wiegevorrichtung mit dem Mischer in Abhängigkeit eines Ist-Druckes in dem Mischer. Dadurch kann vermieden werden, dass die Wiegevorrichtung gegen einen Überdruck im Mischer geöffnet wird. Die Zuverlässigkeit des Wiegevorgangs ist erhöht.

Bei einem Verfahren, bei dem der Soll-Druck dem Umgebungsdruck entspricht, ist ein Öffnen der Wiegevorrichtung gegen Überdruck ausgeschlossen.

Eine Anlage gemäß Anspruch 2 ermöglicht eine unkomplizierte und zuverlässige Erfassung der Masse des Inhaltsstoffes in der Wiegevorrichtung. Insbesondere sind mehrere Messdosen, insbesondere mindestens zwei Messdosen, insbesondere mindestens drei Messdosen, insbesondere mindestens vier Messdosen, insbesondere mindestens acht Messdosen und insbesondere höchstens einhundert Messdosen vorgesehen. Die Wiegevorrichtung weist insbesondere einen Aufnahmebehälter auf, der an der mindestens einen Messdose aufgehängt ist.

Eine Anlage gemäß Anspruch 3 gewährleistet eine Entlüftung der Wiegevorrichtung. Die Qualität des Wiegeergebnisses ist dadurch verbessert.

Eine Anlage gemäß Anspruch 4 ermöglicht eine zuverlässige Befüllung der Wiegevorrichtung, insbesondere einen flexiblen Anschluss einer Befüllleitung an die Wiegevorrichtung.

Eine Anlage gemäß Anspruch 5 ermöglicht eine zuverlässige Entleerung der Wiegevorrichtung, wobei insbesondere eine flexible und elastische Verbindung der Wiegevorrichtung mit der Verbindungsleitung gewährleistet ist.

Ein Verfahren gemäß Anspruch 7 ermöglicht eine vorteilhafte Entleerung der Wiegevorrichtung.

Ein Verfahren gemäß Anspruch 8 vereinfacht eine wiederholte Verwiegung verschiedener Inhaltsstoffe in der Anlage.

Ein Verfahren gemäß Anspruch 9 ermöglicht einen automatisierten, insbesondere einen vollständig automatisierten, Betrieb der Anlage.

Sowohl die in den Patentansprüchen angegebenen Merkmale als auch die in dem nachfolgenden Ausführungsbeispiel einer erfindungsgemäßen Anlage angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. In dieser zeigen:
- Fig. 1: eine schematische Ansicht einer erfindungsgemäßen Anlage zum Wiegen und Mischen von Inhaltsstoffen für die Asphaltherstellung mit einem in einer Schließposition angeordneten Absperrelement,
- Fig. 2: eine Fig. 1 entsprechende Darstellung der Anlage mit dem Absperrelement in einer Offenposition.

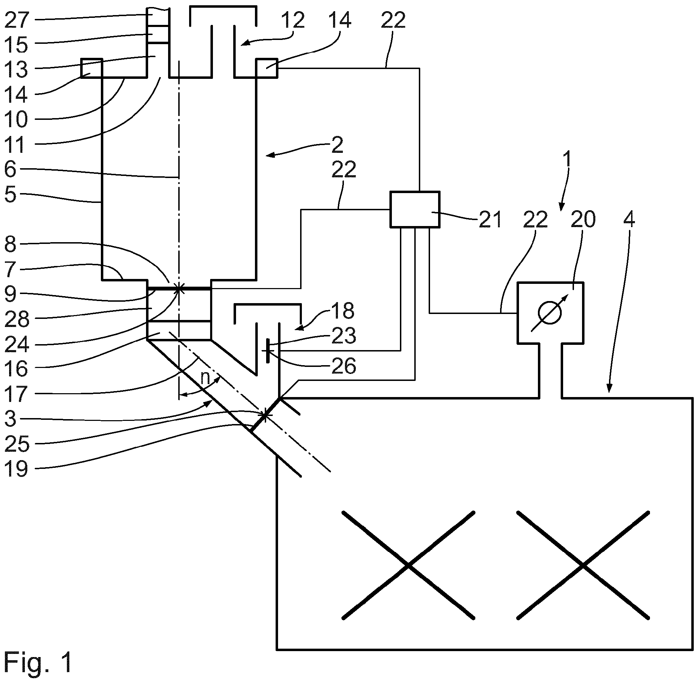

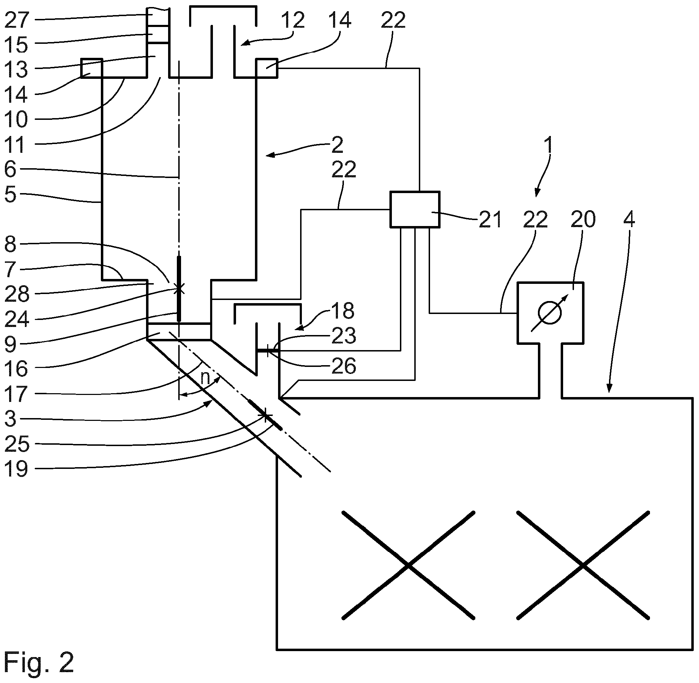

Eine in Fig. 1 und 2 gezeigte Anlage 1 umfasst eine Wiegevorrichtung 2, die mittels einer Verbindungsleitung 3 mit einem Mischer 4 verbunden ist.

Die Wiegevorrichtung 2 umfasst einen Aufnahmebehälter 5, der im Wesentlichen zylindrisch ausgeführt ist und eine Behälterlängsachse 6 aufweist, die vertikal orientiert ist. An einem Boden 7 des Aufnahmebehälters 5 ist, insbesondere zentral, eine Abgabeöffnung 8 angeordnet, die mittels eines Schließelements 9 schließbar ist. Das Schließelement 9 ist als Klappe, insbesondere als sogenannte Entleerklappe, ausgeführt. Die Klappe ist um eine senkrecht zur Zeichenebene in Fig. 1 orientierte Klappen-Schwenkachse 24 schwenkbar gelagert.

An einer dem Boden 7 gegenüberliegend angeordneten Oberseite weist der Aufnahmebehälter 5 einen Deckel 10 auf, an dem eine Befüllöffnung 11 und ein Entlüftungsventil 12 angeordnet sind. Über die Befüllöffnung 11 und einen daran angeformten Befüllstutzen 13 können Inhaltsstoffe in den Aufnahmebehälter 5 der Wiegevorrichtung 2 eingefüllt werden. Dazu kann der Befüllstutzen 13 mit einer nicht dargestellten Versorgungsleitung gekoppelt werden, die insbesondere mit einem nicht dargestellten Vorratsbehälter verbunden ist, in dem der jeweilige Inhaltsstoff bevorratet ist.

Stromaufwärts der Befüllöffnung 11 ist an dem Befüllstutzen 13 ein Befüll-Kompensator 15 vorgesehen, der den Befüllstutzen 13 mit einer Befüllleitung 27 verbindet. Die Befüllleitung ist mit einer nicht dargestellten Pumpe mit Frequenzumformer verbunden. Der Frequenzumformer dient zum Steuern der Drehzahl, mit der die Pumpe betrieben wird. Bei einer Nenndrehzahl von beispielsweise 50 Hz erfolgt eine schnelle Grobverwiegung. Bei einer Annäherung an den Sollwert der abzuwiegenden Masse schaltet der Frequenzumformer auf eine reduzierte Drehzahl, die veränderlich einstellbar ist, beispielsweise auf 25 Hz. Bei der reduzierten Drehzahl ergibt sich ein reduzierter Massestrom des Inhaltsstoffes, sodass die Verwiegegenauigkeit erhöht ist.

Die Befüllleitung 27 ist insbesondere eine Rohrleitung, die von oben an die Wiegevorrichtung 2 führt. Insbesondere sind die Befüllleitung 27 und der Befüllstutzen 13 konzentrisch zueinander orientiert, aber mit einem axialen Abstand zueinander angeordnet. Der Befüllstutzen 13 ist insbesondere ein am Deckel 10 angeschweißtes Rohrstück. Die Befüllleitung 27 und der Befüllstutzen 13 weisen insbesondere identische Durchmesser auf. Der Befüll-Kompensator 15 verbindet die gegenüberliegenden Enden der Befüllleitung 27 und des Befüllstutzens 13. Der Befüll-Kompensator 15 ist insbesondere aus einem elastischen und temperaturfesten Gummi-Schlauch ausgeführt. Der Befüll-Kompensator 15 ermöglicht eine flexible Verbindung der Befüllleitung 27 mit dem Befüllstutzen 13. Mittels des Befüll-Kompensators ist sichergestellt, dass kein Inhaltsstoff unbeabsichtigt austreten kann. Der Befüllstutzen 13 ist mit der Befüllleitung 27 elastisch verbunden.

Der Aufnahmebehälter 5 ist an drei Messdosen 14 aufgehängt, von welchen in den Fig. 1 und 2 nur zwei dargestellt sind. Mittels der Messdosen 14 kann die Masse des Inhaltsstoffes in dem Aufnahmebehälter 5 erfasst werden.

Stromabwärts der Abgabeöffnung 8 ist ein Entleer-Kompensator 16 angeordnet. Das Schließelement 9 ist in einem Rohrstück 28 angeordnet, das unmittelbar am Boden 7 des Aufnahmebehälters 5 befestigt, insbesondere angeflanscht ist. Dem Rohrstück 28 schließt sich entlang der Materialförderrichtung ein nicht näher dargestelltes Konus-Rohr an, das in die Verbindungsleitung 3, die einen größeren Innendurchmesser als das Konus-Rohr aufweist, mündet. Das Rohrstück 28, das Konus-Rohr und die Verbindungsleitung 3 sind so ausgeführt, dass sie sich wechselweise nicht berühren. Zwischen den Rohrstücken entstehende Spalte sind jeweils mittels eines elastischen und temperaturfesten Gummi-Schlauchs, insbesondere in Form einer Manschette, flexibel und elastisch verbunden.

Der Entleer-Kompensator 16 umfasst das Konus-Rohr mit den beiden Gummi-Schläuchen zur Verbindung mit dem Rohrstück 28 einerseits und der Verbindungsleitung 3 andererseits.

Die Verbindungsleitung 3 ist gemäß dem gezeigten Ausführungsbeispiel als Fallrohr und insbesondere als Freifallrohr ausgeführt. Inhaltsstoffe, die aus der Wiegevorrichtung 2 in das Freifallrohr abgegeben werden, werden insbesondere selbsttätig, also schwerkraftbedingt, in den Mischer 4 zugeführt. Eine separate Förderung der Inhaltsstoffe entlang der Verbindungsleitung 3 ist entbehrlich. Das Freifallrohr ist als linearer Rohrabschnitt ausgeführt und weist eine Rohrlängsachse 17 auf, die gegenüber der Vertikalen mit einem Neigungswinkel n geneigt angeordnet ist. Der Neigungswinkel beträgt gemäß dem gezeigten Ausführungsbeispiel weniger als 45° und insbesondere weniger als 30°. Entlang der Verbindungsleitung 3 sind ein Be-/Entlüftungsventil 18 mit einer Ventilklappe 23 und stromabwärts dazu ein Absperrelement 19 in Form einer Absperrklappe angeordnet. Das Absperrelement ist um eine senkrecht zur Bildebene orientierte Absperrelement-Schwenkachse 25 schwenkbar gelagert.

Das Freifallrohr 3 ist fest mit dem Mischer 4 verbunden. Wenn das Absperrelement 19 geschlossen ist, insbesondere hermetisch abgedichtet ist, kann eine Druckkraft aus dem Mischer 4 nicht in das Freifallrohr 3 übertragen werden. Der Mischer 4 ist mechanisch von der Wiegevorrichtung 2 entkoppelt.

Das Absperrelement 19 ist zwischen einer in der Fig. 1 dargestellten Schließposition und einer in Fig. 2 dargestellten Offenposition verlagerbar.

Das Be-/Entlüftungsventil 18 kann mittels der Ventilklappe 23 geöffnet oder geschlossen werden. Die Ventilklappe 23 ist um eine senkrecht zur Zeichenebene orientierte Ventilklappen-Schwenkachse 26 schwenkbar gelagert. Im geöffneten Zustand ist das Fallrohr belüftet. Das bedeutet, dass ein Gasaustausch der Verbindungsleitung 3 über das Be-/Entlüftungsventil 18 mit der Umgebung erfolgen kann.

Der Mischer 4 ist gemäß dem gezeigten Ausführungsbeispiel als Doppelwellenzwangsmischer ausgeführt, der zwei gegenläufig drehende Wellen aufweist, die über ein Getriebe miteinander verbunden sind. An den Wellen sind Mischerarme mit Mischerpaddeln befestigt, insbesondere angeschraubt.

Der Mischer 4 weist einen Sensor 20 auf. Der Sensor 20 ist ein Druck-sensor und dient zum Ermitteln eines Ist-Druckes im Mischer 4.

Die Anlage 1 ferner eine zentrale Steuerungseinheit 21 auf, die mit dem Sensor 20, mit dem Schließelement 9, mit dem Absperrelement 19, mit dem Be-/Entlüftungsventil 18, insbesondere mit der Ventilkappe 23, und der Wiegevorrichtung 2, insbesondere den Messdosen 14, in Signalverbindung steht. Die Signalverbindung ist insbesondere bidirektional und gemäß dem gezeigten Ausführungsbeispiel kabelgebunden ausgeführt. Die kabelgebundene Signalübertragung ist durch die Signalleitungen 22 gezeigt. Einzelne oder sämtliche Signalverbindungen können auch kabellos, beispielsweise durch Funkübertragung, ausgeführt sein.

Die Wiegevorrichtung 2 wird gemäß dem gezeigten Ausführungsbeispiel auch als Bitumenwaage bezeichnet. Die Anlage 1 wird als Bitumenfreifallwaage bezeichnet.

Nachfolgend wird ein Verfahren zum Betrieb der Anlage 1 näher erläutert. Zum Wiegen und Mischen von Inhaltsstoffen für die Asphaltherstellung wird zunächst ein erster Inhaltsstoff in den Aufnahmebehälter 5 der Wiegevorrichtung 2 eingefüllt. Während des Einfüllens ist die Abgabeöffnung 8 mittels des Schließelements 9 geschlossen. Dieser Zustand der Anlage ist in Fig. 1 dargestellt. Während des Einfüllens des ersten Inhaltsstoffes ist das Be-/Entlüftungsventil 18 geöffnet und das Absperrelement 19 in der in Fig. 1 gezeigten Schließposition. Durch die in Fig. 1 gezeigten Anordnung ist sichergestellt, dass Druckschwankungen in dem Mischer keine Drucckräfte auf die Fläche des Schließelements 9 übertragen. Die Verwiegung des ersten Inhaltsstoffes in der Wiegevorrichtung 2 ist in dieser Anordnung, die auch als Wiegeanordnung bezeichnet wird, exakt.

Die in Fig. 1 gezeigte Anordnung der Anlage 1 wird als Wiege-Anordnung bezeichnet.

Während die Wiegevorrichtung 2 mit dem ersten Inhaltsstoff befüllt wird, überwachen die Messdosen 14, ob die erforderliche Masse des ersten Inhaltsstoffes bereits in der Wiegevorrichtung 2 vorliegt. Bei Erreichen der erforderlichen Masse wird ein Wiegevorrichtung-Freigabesignal von den Messdosen 14 der Wiegevorrichtung 2 an die Steuerungseinheit 21 übermittelt.

Der Sensor 20 überwacht den Ist-Druck im Mischer 4, insbesondere kontinuierlich. Wenn der Ist-Druck im Mischer 4 einen Soll-Druck nicht übersteigt, übermittelt der Sensor 20 ein Mischer-Freigabesignal an die Steuerungseinheit 21. Der Soll-Druck ist insbesondere ein veränderlich vorgebbarer Druckhöchstwert. Vorteilhaft ist es, wenn der Druckhöchstwert dem Umgebungsdruck entspricht. Das bedeutet, dass das Mischer-Freigabesignal erzeugt und an die Steuerungseinheit 21 übermittelt wird, wenn in dem Mischer Unterdruck oder Umgebungsdruck herrscht.

Das Abgeben des ersten Inhaltsstoffes aus der Wiegevorrichtung 2 in die Verbindungsleitung 3 und von dort in den Mischer 4 erfolgt durch Öffnen des Schließelements 9 und des Absperrelements 19 sowie durch Schließen des Be-/Entlüftungsventils 18. Insbesondere erfolgen diese Schließ-/Öffnungsvorgänge gleichzeitig. Besonders vorteilhaft es ist, wenn die Schließ- und Öffnungsvorgänge erst dann erfolgen, wenn das Wiegevorrichtungs-Freigabesignal und das Mischer-Freigabesignal vorliegen. In diesem Fall können das Schließelement 9, das Absperrelement 19 und das Be-/Entlüftungsventil 18 von der Steuerungseinheit 21 angesteuert werden.

Der erste Inhaltsstoff kann dann aus der Wiegevorrichtung 2, insbesondere selbsttätig in Folge der Schwerkraft, über das Freifallrohr 3 in den Mischer 4 gelangen. Dadurch, dass ein Zuführen des ersten Inhaltsstoffes in den Mischer 4 bei Überdruck verhindert ist, ist das Risiko verhindert, dass Bitumen aus der Wiegevorrichtung 2 herausgedrückt wird und Verletzungen beteiligter Personen in Folge des typischerweise 160 °C heißen Bitumens auftreten.

Ein Öffnen bzw. Schließen der Klappen 9, 19 und 23 erfolgt durch eine 90°-Drehung bezüglich der jeweiligen Schwenkachsen 24, 25, 26.

Die in Fig. 2 gezeigte Anordnung der Anlage 1 wird als Entleer-Anordnung bezeichnet.

Die Anlage 1 bleibt in der Entleer-Anordnung so lange, bis die Wiegevorrichtung 2 vollständig entleert ist. Dies wird insbesondere mittels der Messdosen 14 überwacht. Die Messdosen 14 geben bei Erreichen der vollständigen Entleerung ein entsprechendes Stellsignal an die Steuerungseinheit 21. Die Steuerungseinheit 21 veranlasst das erneute Schließen des Schließelements 9 und des Absperrelements 19 sowie das Öffnen der Ventilklappe 23. Die Anlage 1 wird also wieder in die Wiege-Anordnung gemäß Fig. 1 überführt. In dieser Anordnung kann der nächste Inhaltsstoff in die Wiegevorrichtung 2 eingefüllt werden.

Nach Beendigung des Mischbetriebs ist es vorteilhaft, wenn das Schließelement 9 und die Ventilklappe 23 geschlossen, das Absperrelement 19 aber geöffnet bleiben, so dass das Freifallrohr in den Mischer 4 austropfen kann.

## Patentansprüche

1. Anlage zum Wiegen und Mischen von Inhaltsstoffen für die Asphaltherstellung umfassend
a. eine Wiegevorrichtung (2) zum Wiegen eines Inhaltsstoffes,
b. eine an eine schließbare Abgabeöffnung (8) der Wiegevorrichtung (2) angeschlossene Verbindungsleitung (3), die ein Absperrelement (19) aufweist,
c. einen an die Verbindungsleitung (3) angeschlossenen Mischer (4) zum Mischen von Inhaltsstoffen,
d. ein an der Abgabeöffnung (8) angeordnetes Schließelement (9), **dadurch gekennzeichnet, dass** die Verbindungsleitung (3) ein Be-/Entlüftungsventil (18) aufweist und die Anlage einen Sensor (20) zum Ermitteln eines Ist-Druckes im Mischer (4), und eine Steuerungseinheit (21) aufweist, wobei die Steuerungseinheit (21) mit dem Sensor (20), dem Schließelement (9), dem Absperrelement (19), dem Be-/Entlüftungsventil (18) und der Wiegevorrichtung (2) in Signalverbindung steht.

2. Anlage gemäß Anspruch 1, **gekennzeichnet durch** mindestens eine Messdose (14) der Wiegevorrichtung (2) zum Erfassen der Masse des in die Wiegevorrichtung (2) zugegebenen Inhaltsstoffes, wobei insbesondere die mindestens eine Messdose (14) mit der Wiegevorrichtung (2) in Signalverbindung steht.

3. Anlage gemäß einem der vorstehenden Ansprüche, **gekennzeichnet durch** ein an der Wiegevorrichtung (2) angeschlossenes Entlüftungsventil (12).

4. Anlage gemäß einem der vorstehenden Ansprüche, **gekennzeichnet durch** einen Befüll-Kompensator (15) der Wiegevorrichtung (2), wobei der Befüll-Kompensator (15) einen flexiblen Anschluss einer Befüllleitung an die Wiegevorrichtung (2) darstellt.

5. Anlage gemäß einem der vorstehenden Ansprüche, **gekennzeichnet durch** einen Entleer-Kompensator (16) der Wiegevorrichtung (2), wobei der Entleer-Kompensator (16) eine flexible Verbindung der Wiegevorrichtung (2) mit einer Verbindungsleitung darstellt.

6. Verfahren zum Wiegen und Mischen von Inhaltsstoffen für die Asphaltherstellung umfassend die Verfahrensschritte
- Bereitstellen einer Anlage (1) gemäß einem der vorstehenden Ansprüche,
- Einfüllen eines Inhaltsstoffes in die Wiegevorrichtung (2), wobei während des Einfüllens die Abgabeöffnung (8) geschlossen ist, das Be-/Entlüftungsventil (18) geöffnet ist und das Absperrelement (19) in einer Schließposition angeordnet ist,
- Abgeben des Inhaltsstoffes aus der Wiegevorrichtung (2) durch Öffnen der Abgabeöffnung (8) und durch Verlagern des Absperrelements (19) in eine Offenposition,
- Erfassen des Ist-Druckes im Mischer (4) mittels des Sensors (20), Schließen des Be-/Entlüftungsventils (18), wenn die erforderliche Masse des Inhaltsstoffes in der Wiegevorrichtung (2) vorliegt und wenn der Ist-Druck im Mischer (4) einen veränderlich vorgebbaren Soll-Druck nicht übersteigt, wobei der Soll-Druck dem Umgebungsdruck entspricht.

7. Verfahren gemäß Anspruch 6, **dadurch gekennzeichnet, dass** das Öffnen der Abgabeöffnung (8) und das Verlagern des Absperrelements (19) gleichzeitig erfolgen, insbesondere nach dem Schließen des Be-/Entlüftungsventils (18).

8. Verfahren gemäß einem der Ansprüche 6 bis 7, **dadurch gekennzeichnet, dass** die Abgabeöffnung (8) wieder geschlossen wird, wenn die Wiegevorrichtung (2) entleert ist, wobei insbesondere auch das Absperrelement (19) in die Schließposition verlagert und/oder das Be-/Entlüftungsventil (18) geöffnet werden.

9. Verfahren gemäß einem der Ansprüche 6 bis 8, **dadurch gekennzeichnet, dass** das Abgeben des Inhaltsstoffes gesteuert mittels einer Steuerungseinheit (21) erfolgt.

## Claims

1. System for weighing and mixing of ingredients for asphalt production comprising
a. a weighing apparatus (2) for weighing an ingredient,
b. a connecting pipe (3) that is connected to a closable discharge opening (8) of the weighing apparatus (2) and that has a shut-off member (19),
c. a mixer (4) that is connected to the connecting pipe (3) for mixing ingredients,
d. a closure member (9) that is arranged at the discharge opening (8), **characterized in that** the connecting pipe (3) has a ventilation/exhaust valve (18) and the installation has a sensor (20) for determining an actual pressure in the mixer (4) and a control unit (21), wherein the control unit (21) is in signal connection with the sensor (20), the closure member (9), the shut-off member (19), the ventilation/exhaust valve (18) and the weighing apparatus (2).

2. System according to claim 1, **characterized by** at least one load cell (14) of the weighing apparatus (2) for detecting the mass of the ingredient added to the weighing apparatus (2), wherein in particular the at least one load cell (14) is in signal connection with the weighing apparatus (2).

3. System according to any one of the preceding claims, **characterized by** a vent valve (12) connected to the weighing apparatus (2).

4. System according to any one of the preceding claims, **characterized by** a filling compensator (15) of the weighing apparatus (2), wherein the filling compensator (15) is a flexible connection of a filling pipe to the weighing apparatus (2).

5. System according to any one of the preceding claims, **characterized by** a discharge compensator (16) of the weighing apparatus (2), wherein the discharge compensator (16) is a flexible connection of the weighing apparatus (2) to a connecting pipe.

6. Method for weighing and mixing ingredients for asphalt production, comprising the following method steps
- providing a system (1) according to any one of the preceding claims,
- filling an ingredient into the weighing apparatus (2), wherein during the filling procedure the discharge opening (8) is closed, the ventilation/exhaust valve (18) is open and the shut-off member (19) is arranged in a closed position,
- discharging the ingredient from the weighing apparatus (2) by opening the discharge opening (8) and displacing the shut-off member (19) to an open position,
- detecting the actual pressure in the mixer (4) by means of the sensor (20), closing the ventilation/exhaust valve (18) when the required mass of the ingredient is present in the weighing apparatus (2) and when the actual pressure in the mixer (4) does not exceed a variably predeterminable target pressure, wherein the target pressure corresponds to the ambient pressure.

7. Method according to claim 6, **characterized in that** opening the discharge opening (8) and displacing the shut-off member (19) take place simultaneously, in particular after closing the ventilation/exhaust valve (18).

8. Method according to any one of claims 6 to 7, **characterized in that** the discharge opening (8) is closed again when the weighing apparatus (2) is emptied, wherein in particular also the shut-off member (19) is displaced into the closed position and/or the ventilation/exhaust valve (18) is opened.

9. Method according to any one of claims 6 to 8, **characterized in that** dispensing of the ingredient takes place in a controlled manner by means of a control unit (21).

## Revendications

1. Installation de pesée et de mélange d'ingrédients pour la fabrication d'asphalte comprenant
a. un dispositif de pesée (2) pour peser un ingrédient,
b. une conduite de liaison (3) raccordée à un orifice de distribution (8) pouvant être fermée du dispositif de pesée (2), qui présente un élément de barrage (19),
c. un mélangeur (4) raccordé à la conduite de liaison (3) pour mélanger les ingrédients,
d. un élément de fermeture (9) disposé sur l'orifice de distribution (8),
**caractérisée en ce que** la conduite de liaison (3) présente une soupape d'aération/de ventilation (18) et l'installation présente un capteur (20) pour déterminer une pression réelle dans le mélangeur (4) et une unité de commande (21), l'unité de commande (21) étant en liaison de signalisation avec le capteur (20), l'élément de fermeture (9), l'élément de barrage (19), la soupape d'aération/de ventilation (18) et le dispositif de pesée (2).

2. Installation selon la revendication 1, **caractérisée par** au moins une cellule de charge (14) du dispositif de pesée (2) pour détecter la masse de l'ingrédient ajouté dans le dispositif de pesée (2), ladite au moins une cellule de charge (14) étant notamment en liaison de signalisation avec le dispositif de pesée (2).

3. Installation selon l'une quelconque des revendications précédentes, **caractérisée par** une soupape d'aération (12) raccordée au dispositif de pesée (2).

4. Installation selon l'une quelconque des revendications précédentes, **caractérisée par** un compensateur de remplissage (15) du dispositif de pesée (2), le compensateur de remplissage (15) constituant une liaison flexible d'une conduite de remplissage au dispositif de pesée (2).

5. Installation selon l'une quelconque des revendications précédentes, **caractérisée par** un compensateur de vidange (16) du dispositif de pesée (2), le compensateur de vidange (16) constituant une liaison flexible du dispositif de pesée (2) avec une conduite de liaison.

6. Procédé de pesée et de mélange d'ingrédients pour la fabrication d'asphalte, comprenant les étapes de procédé suivantes
- mise à disposition d'une installation (1) selon l'une quelconque des revendications précédentes,
- remplissage d'un ingrédient dans le dispositif de pesée (2), dans lequel, pendant le remplissage, l'orifice de distribution (8) est fermée, la soupape d'aération/de ventilation (18) est ouverte et l'élément de barrage (19) est disposé dans une position de fermeture,
- distribution de l'ingrédient à partir du dispositif de pesée (2) en ouvrant l'orifice de distribution (8) et en déplaçant l'élément de barrage (19) dans une position ouverte,
- détection de la pression réelle dans le mélangeur (4) au moyen du capteur (20), fermeture de la soupape d'aération/de ventilation (18) lorsque la masse requise de l'ingrédient est présente dans le dispositif de pesée (2) et lorsque la pression réelle dans le mélangeur (4) ne dépasse pas une pression de consigne pouvant être prédéterminée de manière variable, la pression de consigne correspondant à la pression ambiante.

7. Procédé selon la revendication 6, **caractérisé en ce que** l'ouverture de l'orifice de distribution (8) et le déplacement de l'élément de barrage (19) sont réalisés simultanément, en particulier après la fermeture de la soupape d'aération/de ventilation (18).

8. Procédé selon l'une quelconque des revendications 6 à 7, **caractérisé en ce que** l'on referme l'orifice de distribution (8) lorsque le dispositif de pesée (2) est vidé, dans lequel en particulier également l'élément de barrage (19) est déplacé dans la position de fermeture et/ou la soupape d'aération/d'évacuation (18) est ouverte.

9. Procédé selon l'une quelconque des revendications 6 à 8, **caractérisé en ce que** la distribution de l'ingrédient a lieu de manière commandée au moyen d'une unité de commande (21).
